# EUROPEAN PATENT SPECIFICATION

(11) **EP 1 979 098 B1**
(45) Date of publication and mention of the grant of the patent: **12.11.2025**
(21) Application number: 07700296.2
(22) Date of filing: 19.01.2007
(51) Int. Cl.: B02C 1/10, B02C 15/00, B02C 13/26, B02C 17/22, B02C 13/28, B02C 4/30, B23K 1/00, B23K 103/12

(54) **METHOD FOR MANUFACTURING A MULTIMATERIAL COMPONENT OR CONSTRUCTION**
VERFAHREN ZUR HERSTELLUNG EINER AUS MEHREREN MATERIALIEN BESTEHENDEN KOMPONENTE ODER KONSTRUKTION
PROCÉDÉ POUR FABRIQUER UN COMPOSANT OU UNE CONSTRUCTION À MATÉRIAUX MULTIPLES

(30) Priority: 25.01.2006 FI 20060071
(43) Date of publication of application: 15.10.2008
(73) Proprietor: Metso Finland Oy, 02230 Espoo (FI)
(72) Inventor: HELLMAN, Jussi, FI-00930 Helsinki (FI); LIIMATAINEN, Jari, FI-33240 Tampere (FI)
(74) Representative: Papula Oy
(86) International application number: PCT/FI2007/050031
(87) International publication number: WO 2007/085694

(56) References cited:
- WO-A1-84/04760
- DE-A1- 19 721 637
- DE-A1- 2 500 661
- GB-A- 1 480 057
- JP-A- 2004 160 360
- JP-A- H07 241 484
- JP-A- H07 323 238
- US-B1- 6 523 767

## Description

The present invention relates to manufacturing of multimaterial components or constructions by manufacturing pieces at least of two different materials, said pieces to be joined with each other for providing a multimaterial component or construction.

### Background

Wear resistant constructions and components are used e.g. in equipment for reducing the size of rock, building or recycling material. In these processes, the material to be crushed, pressed between the components or colliding against the surfaces of the constructions or components, wears the surfaces of the components in the extent depending on the surface pressure of the contacts, velocities, material characteristics of the component surfaces and the physical characteristics of the material to be crushed, like the compressive strength and tribology characteristics. In other words, as well the movement of the material to be crushed with respect to the surfaces of the components as the penetration thereof to the surface of the component has influence on the wear of the component: The material moving with respect to the surfaces of the components causes cutting and grooving, and the material penetrating to the surface produces burrs on the affected area, that as a result of repeated procedure are easily loosened from the surface of the constructions and components by breakage, fatigue or formation of cuttings. The intensity of the wear of the constructions and components in the different portions thereof and generally in the equipment is defined by the geometry of the equipment, motion state of the components and the flow parameters of the material to be crushed.

The effective lifetime of the constructions and components is in general tried to be increased not only by affecting the geometry and internal flow conditions of the equipment, but also particularly by choosing advantageous materials. The tribology characteristics of metallic wear protection materials of prior art are based e.g. on the advantageous alloying of the metals in question, and eventual adding of particles, on manufacturing processes and further treatments thereof, like heat treatments, whereby phases with better resistance of wear phenomena than usual will be formed in their microstructure as a combined effect of all these factors, said phases typically being hard but having often low toughness and fatigue resistance. As also other than tribology characteristics are required from the constructions and components, they usually cannot be manufactured totally of the materials having the microstructure described above. On the other hand, also the controlling of the form of the wear of the constructions and components e.g. for maintaining the geometry and internal flow model of the equipment may require that different portions of the constructions and components are manufactured of materials different from each other.

The methods used in manufacturing multimaterial components must almost without exception be adapted according the requirements of all the materials forming the construction, whereby the characteristics reached by each material fall short of the target level of the respective material, and the best possible performance of the construction or the component will not be reached. Another significant challenge is to maintain the measure and form tolerances of the pieces or portions during the assembly and the following treatments thereof, which will be experienced by the pieces or portions and the boundaries thereof, formed of different materials. Thereby the different behavior of the materials in contact or joined to each other, e.g. different volumetric changes, can cause damage of the constructions and components. A plurality of manufacturing methods will be totally excluded or at least made unreasonably more complicated by the above mentioned requirements, in terms of commercial exploitation.

The methods and wear parts in accordance with Patent publications JP5317731, JP5317732 and JP6079187, on the contrary, are attempting at manufacturing constructions, where the wearing on desired portions is tried to be increased, and thus the form of the surface of the wear parts is tried to be controlled, by placing less wear resistant portions to a body part being more wear resistant.

In the wear parts disclosed in Patent publication JP2001165146, a second material being more wear resistant is joined for controlling the wear form, but only a joining method requiring exact form and measure tolerances is disclosed for manufacturing constructions according to the target, which in terms of cost-efficiency is notreasonable.

Further, Patent publication JP7323238 aims at the most preferred form of wear parts for the assembly of the constructions in terms of functionality by mounting exactly formed wear protection pieces, to the component bodies, whereby the expensive multi-stage manufacturing process of both the body parts and the wear protection pieces cannot he omitted.

Patent publications JP2001269589 and US 6,123,279 disclose wear parts correspondingly aiming at increasing the wear resistance by mounting wear resistant material onto the body of the wear part, hut by using the geometrical form-locking connection, as well requiring application of technically demanding and cost-increasing form-giving methods for wear protection materials with difficult workability and formability, like the hard metals according to the latter publication, before the dimensional and form accuracy required for the assembly can he achieved.

Patent publication JP2004160360 also discloses, that the wear resistant part must he formed (grooved) in a certain way for joining, which is not technically and economically profitable for the wear resistant materials to he used in the method in accordance with the Patent.

Patent publication WO 03/099443 Al discloses a manufacturing method of multimaterial constructions, where wear resistant material or materials are joined to a body part made of machinable material by means of hot isostatic pressing directly with direct diffusion joint or by using powder material added between the body and the wear resistant pieces. The gas-tight encapsulating of the construction required by the method, and the fact that at least a partial machining is generally required for the pieces to be joined, increase the work phases of the component manufacturing and increase the manufacturing costs too much for the utilization of the method to be economically profitable.

DE2500661 discloses a method for manufacturing a bottom part of an excavator bucket.

### Description of the Invention

By means of the solution in accordance with the present invention, a multimaterial component or construction typically used as a wear part is provided by connecting pieces made with loose dimensional and form requirements into an entity that in all respects will reach the optimal form in terms of functionality not until the use.

More precisely, the manufacturing method in accordance with the invention is characterized by what is stated in the characterizing part of Claim 1, and the use of the multimaterial component or construction manufactured with the method in accordance with the present invention is characterized by what is stated in the characterizing part of Claim 6.

The invention will be described, by means of example, in more detail in the following with reference to the enclosed drawings, in which
- Figure 1A: shows a basic material body of a multimaterial component according to the invention,
- Figure 1B: is a cross-sectional view along the line A-A of the basic material body of Figure 1A,
- Figure 2: shows material pieces to be joined to the basic material body of Figures 1A and 1B,
- Figure 3A: shows pieces of Figures 1 and 2 joined with each other into a multimaterial component,
- Figure 3B: is a cross-sectional view along the line A-A of the multimaterial component of Figure 3A,

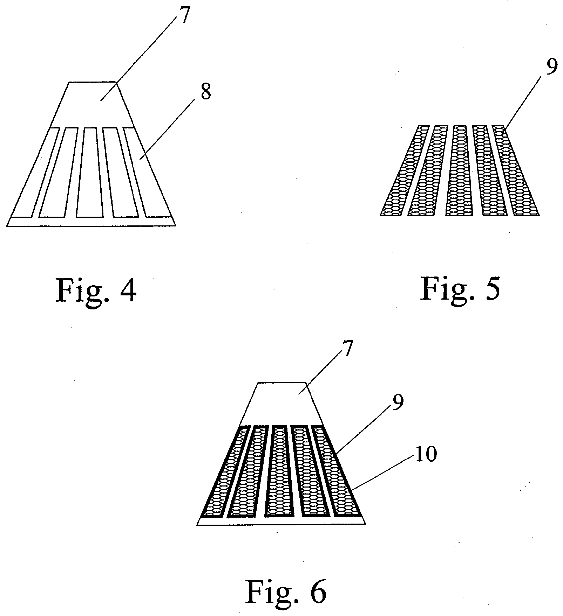

- Figure 4: shows an alternative basic material body of the multimaterial component according to the invention,
- Figure 5: shows material pieces to be joined to the basic material body of Figure 4, and
- Figure 6: shows the pieces of Figures 4 and 5 joined with each other into a multimaterial component.

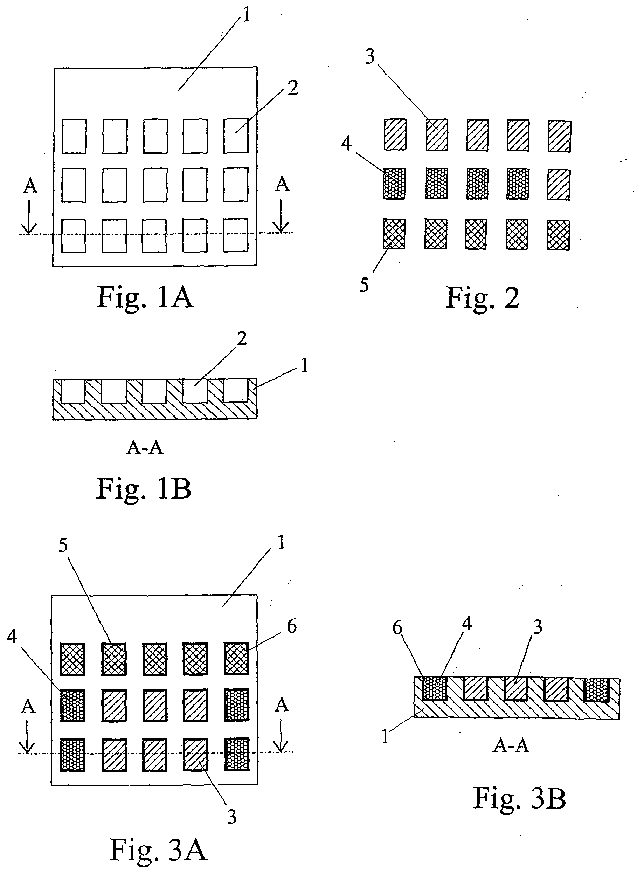

A basic material body 1 of a multimaterial component according to the present invention, shown in Figures 1A and 1B, comprises a piece formed of the basic material having joining points 2 for the pieces to be joined ready formed at the determined places of the basic material body, said joining points in the example of Figures 1A and 1B being cuttings or cavities formed on the surface of the material. The body 1 is made of an iron based (Fe>50%) basic material including a relatively small amount of metal carbides, preferably less than 10 %, by means of a manufacturing method suitable for the respective material, typically by casting, into a form comprising the ready joining points 2.

After the primary manufacture of the basic material body 1, and the eventually needed after-treatments or machining, the body is heat treated under suitable process conditions for achieving as profitable mechanical and tribology characteristics as possible for the basic material.

Figure 2 shows pieces 3, 4 and 5 made of a wear resistant material, being in the example of the Figure manufactured of three different materials, each of the materials having at least partly different characteristics from each other. These pieces 3, 4 and 5 of wear resistant materials are manufactured by means of a manufacturing method well suitable for each material, respectively, like e.g. by casting or some other molten or powder metallurgical method. Pieces 3, 4 and 5 can be manufactured directly to the final form corresponding to their respective joining points, or after the primary manufacturing they can be subjected to simple forming or machining treatments for achieving the final form.

The pieces 3, 4, and 5 made of wear resistant material are preferably made of an iron based metal alloy having a carbon content of more than 1,9 percentage by weight, hardness more than 50 HRC, preferably more than 54 HRC, and said alloy having in its microstructure a portion of more than 10% of metal carbides with a diameter of more than 3 µm.

In the solution in accordance with the invention, the volumetric portion of the wear resistant material of the multimaterial construction or construction to be manufactured is preferably more than 4%.The volume of the biggest single piece manufactured of the wear resistant material is preferably not more than 25% of the total volume of the multimaterial component or construction.

After the primary and eventual secondary working processes the wear resistant pieces 3, 4 and 5 are heat treated, eventually at process conditions differing from each other, in order to provide the most profitable mechanical and tribology characteristics for the pieces. Typically, the wear resistant pieces are of iron based alloy including in their microstructure a bigger volumetric portion of hard phases than the basic material, the grain and particle size thereof being preferably bigger than that of the same or the other hard phases present in smaller amounts in the basic material.

Achieving the most advantageous mechanical and tribology characteristics both of the basic material body 1 and the wear resistant pieces 3, 4 and 5, in this connection means that for example the hardening and tempering temperatures of the iron based alloys differing from each other in terms of their carbon content or other alloying elements are chosen depending on the material, so that the hardness and toughness achieved by each of the materials are as advantageous as possible in the object of use in terms of the loading exerted on each part of the multimaterial component.

Figures 3A and 3B show the final multimaterial component being formed by joining the wear resistant pieces 3, 4 and 5 to the base material body 1 at optimal points based on the wearing exerted on the multimaterial component and the characteristics of the wear resistant pieces. The wear resistant pieces 3, 4 and 5 have been joined to the basic material body 1 with a process, wherein the wear resistant pieces and the frame do not form a molten pool and wherein, principally but not necessarily, a layer of additional material 6 of a suitable thickness has been provided between the wear resistant pieces and the body, said additional material 6 having formed a joint as well between the basic material body 1 as the wear resistant pieces 3, 4 and 5 and thus joined them all into a combined multimaterial construction. A suitable additional material 6 is capable of forming a joint between all the wear resistant pieces of the multimaterial construction in question and the body made of the basic material but does not tend to form harmful reaction products either alone or with the joining materials in the circumstances required by the joining process or in the usage conditions of the construction or the component.

Significant for the choice of the additional material 6 besides the characteristics of the materials to be joined is also that the thermodynamical and kinetic restrictions do not prevent the flowing of the additional material, so that although the body and the wear resistant pieces are manufactured with loose measure tolerances, and often with quite unfinished forms, the space between them will he filled totally or almost totally during the joining process. Taking into consideration all the above described restrictions, the welding or joint casting directly with the molten pools corresponding to the structure of the pieces 1, 3, 4 or 5, for example, is not a possible joining method.

The additional material 6 used in the solution according to the invention can advantageously be some suitable adhesive, the most preferable of them including the epoxy based adhesives, mixtures of rubber and epoxy and mixtures of polyurethane and epoxy. Also another totally or partly organic additional material by means of which the mechanical properties corresponding to the typical tolerances of said adhesives (e.g. strength, shear strength, Shore D hardness and toughness) can be achieved, is well suitable for use in the method in accordance with the invention. Alternatively also a metallic or metal based solder alloy, most preferably a nickel or copper based solder or solder alloy, can be used in a process having both a temperature of not more than 80% of the lowest melting point temperature of the materials to be joined and an atmosphere having such partial pressures of gases, which favor the formation of the desired composition, microstructure and mechanical properties in the joint and joining zone. The solution of the invention, however, is not limited to the use of additional material in joining the wear resistant material pieces to the basic material body.

Figures from 4 to 6 show an alternative example of the solution in accordance with the invention, with a basic material body 7 having a conical form. Groovelike cavities 8 for joining the wear resistant pieces 9 have been formed in the basic material body 7 during the manufacturing. The final multimaterial component is formed by joining the wear resistant pieces 9 by means of additional material 10 to the cavities formed in the basic material body 7.

The solution in accordance with the invention, however, is not limited to the use of additional material for joining the wear resistant pieces to the basic material body. The joint can also be provided by joining the pieces with each other e.g. by means of pressure and the resulting material flow, said pressure being generated mechanically or by
pressure-carrying medium between the surfaces to be joined, in a process, wherein the temperature in the pieces to be joined is approximately not more than 60 % of the lowest melting point temperature of the materials to bejoined.

In the solution in accordance with the invention, the principal function of the body material of the wear parts is to carry the mechanical load exposed in use on the components or parts, and to convey it via the supporting surfaces to the frame of the apparatus acting as a mounting base, whereby an adequate strength, toughness and
fatigue resistance are required from the material thereof. The function of the wear resistant pieces in said multimaterial constructions and components is principally limited to the wear protection, whereby their characteristics can be chosen almost exclusively according to the characteristics profile required by that function. Thereby the essential requirements are especially the hardness of the material and its ability toresist the propagation of the wear phenomena and the resulting material changes typical of the circumstances of the respective application. While propagating, the wear would typically cause grooving, cratering, burring, cutting or breaking of the construction or component material, but with a properly chosen and processed wear resistant material, the occurring
of those phenomena is minor compared with the body material of the construction and the other generally used materials of the application.

For the assembly of the wear resistant construction or component, the basic material body and the wear resistant pieces are cleaned from the affected zones of the surface like oxidation zones, or from impurities like cutting fluid residues caused by the primary manufacturing or the followed working and/or machining, which all can have a deteriorating effect on the characteristics of the joining zone formed in the assembly by the body material, the wear resistant pieces and the additional material. To form a joint, a suitable additional material for the respective material pair, as a layer of a suitable thickness is added between the body and the wear resistant pieces prepared as described above. The parameters of the joining process must be selected so that the characteristics of the additional material in the process conditions enable an adequate wetting of the surfaces to be joined and the additional material flow, so that the space between the body and the wear resistant pieces is filled as perfectly as possible. On the other hand, the conditions must not favor too strong reactions of the additional material with any of the materials imparted in the joining.

The characteristics of the wear resistant materials and the sizes of the pieces are preferably determined with following formula: ((sum of the volumetric proportions of the wear resistant materials of the volume of the total construction)/5) + ((HRC hardness of the wear resistant materials as a weighted average of their volumetric proportions)/10).

Thereby the index to be received from the formula should be bigger than 10.

The multimaterial constructions and components manufactured with the method in accordance with the invention are well suitable for use in wear parts in demanding applications like for example in reducing the size of rock, building and/or recycling material.

Among others, the following advantages are provided by the solution in accordance with the present invention:
(i) By limiting the use of wear resistant material in constructions and components only to areas, where it is unavoidable for the part of the wear protection, the manufacturing costs of the products in question can be decreased.
(ii) The single materials to be joined into a multimaterial component or construction by means of the solution in accordance with the invention can be manufactured separately by means of methods well suitable for their manufacturing, whereby their desired technical characteristics can be achieved with more reliability, and as a result, the performance and reliability of the constructions and components will be improved.
(iii) By loosening the dimensional and form tolerances required by the assembly of the constructions, significant savings can be achieved.
(iv) Through decreased use of wear resistant materials and the raw materials needed for manufacturing the same, the ecological efficiency of the constructions and components to be produced will be improved.

## Claims

1. A method for manufacturing a multimaterial component or construction, said method comprising the following steps:
- forming a body (1, 7) of a basic material, said body comprising at least one joining point (2, 8) at least for one piece (3, 4, 5, 9) formed of wear resistant material, wherein the body (1, 7) is heat treated after forming, and
- forming of at least one wear resistant material at least one piece (3, 4, 5, 9) to be joined to the body (1, 7) formed of the basic material,
- joining at least one piece (3, 4, 5, 9), formed of wear resistant material, to the body (1, 7) formed of the basic material,
- wherein at least one piece (3, 4, 5, 9), made of wear resistant material is joined to the body (1, 7) formed of the basic material at a temperature which is not more than 80 % of the lowest melting point temperature of the materials to be joined, wherein
forming of at least one wear resistant material is done by molten or powder metallurgical method and further processed by forming and heat treatment to form at least one piece (3, 4, 5, 9), wherein
the characteristics of the wear resistant materials (3, 4, 5, 9) and the piece sizes are determined with the following formula: ((sum of the volumetric percentages of the wear resistant materials of the volume of the total construction)/5) + ((HRC hardness of the wear resistant materials as a weighted average of their volumetric percentages)/10) so that the resulted index is more than 10,
and the volume of the biggest single piece (3, 4, 5, 9) manufactured of the wear resistant material is not more than 25% of the volume of the whole multimaterial component or construction, wherein
the at least one piece (3, 4, 5, 9) made of wear resistant material is manufactured of an iron based metal alloy having a carbon content of more than 1.9 weight percent, hardness of more than 50 HRC, preferably of more than 54 HRC and the microstructure of said alloy having a portion of more than 10 % of metal carbides with a diameter of more than 3 µm, and wherein the body (1, 7) is formed of the basic material manufactured of an iron based alloy, preferably Fe>50%,
wherein the portion of the metal carbides in the microstructure is less than 10 %.

2. A method in accordance with Claim 1, **characterized in that** the volumetric percentage of the wear resistant iron based material (3, 4, 5, 9) in the multimaterial component or construction to be manufactured is more than 4 %.

3. A method in accordance with any of the Claims from 1 to 2, **characterized in that** the body (1, 7) formed of the basic material and at least one wear resistant material piece (3, 4, 5, 9) are joined with each other with an additional material (6, 10).

4. A method in accordance with Claim 3, **characterized in that** the additional material (6, 10) is an adhesive.

5. A method in accordance with Claim 3, **characterized in that** the additional material (6, 10) is a metallic or metal based material.

6. Use of a multimaterial component or construction manufactured with a method in accordance with any of the claims from 1 to 5 in reducing the size of rock, building and/or recycling material.

## Patentansprüche

1. Verfahren zur Herstellung einer Multimaterialkomponente oder -konstruktion, umfassend die folgenden Schritte:
- Ausbilden eines Körpers (1, 7) aus einem Basismaterial, wobei der Körper mindestens eine Verbindungsstelle (2, 8) für mindestens ein aus verschleißfestem Material gebildetes Teil (3, 4, 5, 9) aufweist, wobei der Körper (1, 7) nach dem Ausbilden wärmebehandelt wird, und
- Ausbilden, aus mindestens einem verschleißfesten Material, mindestens eines Teils (3, 4, 5, 9), das mit dem aus dem Basismaterial gebildeten Körper (1, 7) verbunden wird,
- Verbinden mindestens eines aus verschleißfestem Material gebildeten Teils (3, 4, 5, 9) mit dem aus dem Basismaterial gebildeten Körper (1, 7),
- wobei mindestens ein aus verschleißfestem Material gebildetes Teil (3, 4, 5, 9) bei einer Temperatur, die nicht mehr als 80 % der niedrigsten Schmelzpunkttemperatur der zu verbindenden Materialien beträgt, mit dem aus dem Basismaterial gebildeten Körper (1, 7) verbunden wird, wobei
das Ausbilden aus mindestens einem verschleißfesten Material durch ein schmelz- oder pulvermetallurgisches Verfahren erfolgt und durch Formung und Wärmebehandlung zu mindestens einem Teil (3, 4, 5, 9) weiterverarbeitet wird, wobei die Eigenschaften der verschleißfesten Materialien (3, 4, 5, 9) und die Größen der Teile mit der folgenden Formel bestimmt werden: ((Summe der prozentualen Volumenanteile der verschleißfesten Materialien am Volumen der Gesamtkonstruktion)/5) + ((HRC-Härte der verschleißfesten Materialien als gewichteterDurchschnitt ihrer prozentualen Volumenanteile)/10), sodass der resultierende Index größer als 10 ist, und das Volumen des größten einzelnen, aus dem verschleißfesten Material hergestellten Teils (3, 4, 5, 9) nicht mehr als 25 % des Volumens der gesamten Multimaterialkomponente oder -konstruktion beträgt, wobei
das mindestens eine aus verschleißfestem Material hergestellte Teil (3, 4, 5, 9) aus einer Metalllegierung auf Eisenbasis mit einem Kohlenstoffgehalt von mehr als 1,9 Gewichtsprozent, mit einer Härte von mehr als 50 HRC, vorzugsweise von mehr als 54 HRC, hergestellt ist und die Mikrostruktur der Legierung einen Anteil von mehr als 10 % Metallkarbiden mit einem Durchmesser von mehr als 3 µm aufweist, und wobei
der Körper (1, 7) aus dem aus einer Legierung auf Eisenbasis, vorzugsweise Fe > 50 %, hergestellten Basismaterial gebildet ist,
wobei der Anteil der Metallkarbide in der Mikrostruktur weniger als 10 % beträgt.

2. Verfahren nach Anspruch 1, **dadurch gekennzeichnet, dass** der prozentuale Volumenanteil des verschleißfesten Materials auf Eisenbasis (3, 4, 5, 9) an der herzustellenden Multimaterialkomponente oder -konstruktion mehr als 4 % beträgt.

3. Verfahren nach einem der Ansprüche 1 bis 2, **dadurch gekennzeichnet, dass** der aus dem Basismaterial gebildete Körper (1, 7) und mindestens ein Teil aus verschleißfestem Material (3, 4, 5, 9) durch ein zusätzliches Material (6, 10) miteinander verbunden werden.

4. Verfahren nach Anspruch 3, **dadurch gekennzeichnet, dass** das zusätzliche Material (6, 10) ein Klebstoff ist.

5. Verfahren nach Anspruch 3, **dadurch gekennzeichnet, dass** das zusätzliche Material (6, 10) ein metallisches oder metallbasiertes Material ist.

6. Verwendung einer gemäß einem Verfahren nach einem der Ansprüche 1 bis 5 hergestellten Multimaterialkomponente oder -konstruktion zur Zerkleinerung von Gesteins-, Bau- und/oder Recyclingmaterial.

## Revendications

1. Méthode de fabrication d'un composant ou d'une construction à matériaux multiples, ladite méthode comprenant les étapes suivantes :
- le formage d'un corps (1, 7) avec un matériau de base, ledit corps comprenant au moins un point d'assemblage (2, 8) pour au moins une pièce (3, 4, 5, 9) formée d'un matériau résistant à l'usure, dans laquelle le corps (1, 7) est traité thermiquement après formage, et
- le formage, avec au moins un matériau résistant à l'usure, d'au moins une pièce (3, 4, 5, 9) destinée à être assemblée au corps (1, 7) formé du matériau de base,
- l'assemblage d'au moins une pièce (3, 4, 5, 9), formée d'un matériau résistant à l'usure, au corps (1, 7) formé du matériau de base,
- dans laquelle au moins une pièce (3, 4, 5, 9), en matériau résistant à l'usure est assemblée au corps (1, 7) formé du matériau de base à une température qui n'est pas supérieure à 80 % de la température de point de fusion la plus basse des matériaux à assembler, dans laquelle
le formage d'au moins un matériau résistant à l'usure est réalisé par une méthode de métallurgie par fusion ou des poudres et traité en outre par formage et traitement thermique pour former au moins une pièce (3, 4, 5, 9), dans laquelle
les caractéristiques des matériaux résistants à l'usure (3, 4, 5, 9) et les tailles de pièce sont déterminées par la formule suivante : ((somme des pourcentages volumétriques des matériaux résistants à l'usure du volume de la construction totale)/5) + ((dureté HRC des matériaux résistants à l'usure en moyenne pondérée de leurs pourcentages volumétriques)/10)
de sorte que l'indice obtenu soit supérieur à 10,
et le volume de la plus grande pièce unique (3, 4, 5, 9) fabriquée à partir du matériau résistant à l'usure ne soit pas supérieur à 25 % du volume de l'ensemble du composant ou de la construction à matériaux multiples, dans laquelle
l'au moins une pièce (3, 4, 5, 9) en matériau résistant à l'usure est fabriquée à partir d'un alliage métallique à base de fer ayant une teneur en carbone supérieure à 1,9 pour cent en poids, une dureté supérieure à 50 HRC, de préférence supérieure à 54 HRC, et la microstructure dudit alliage ayant une part supérieure à 10 % de carbures métalliques d'un diamètre supérieur à 3 µm, et dans laquelle
le corps (1, 7) est formé du matériau de base fabriqué à partir d'un alliage à base de fer, de préférence Fe > 50 %, dans laquelle la part des carbures métalliques dans la microstructure est inférieure à 10 %.

2. Méthode selon la revendication 1, **caractérisée en ce que** le pourcentage volumétrique du matériau à base de fer résistant à l'usure (3, 4, 5, 9) dans le composant ou la construction à matériaux multiples à fabriquer est supérieur à 4 %.

3. Méthode selon l'une quelconque des revendications 1 à 2, **caractérisée en ce que** le corps (1, 7) formé du matériau de base et au moins une pièce de matériau résistant à l'usure (3, 4, 5, 9) sont assemblés entre eux avec un matériau supplémentaire (6, 10).

4. Méthode selon la revendication 3, **caractérisée en ce que** le matériau supplémentaire (6, 10) est un adhésif.

5. Méthode selon la revendication 3, **caractérisée en ce que** le matériau supplémentaire (6, 10) est un matériau métallique ou à base de métal.

6. Utilisation d'un composant ou d'une construction à matériaux multiples fabriqué(e) avec une méthode selon l'une quelconque des revendications 1 à 5 pour réduire la taille d'un matériau rocheux, de construction et/ou de recyclage.
